# EUROPÄISCHE PATENTANMELDUNG

(11) **EP 1 616 489 A1**
(43) Veröffentlichungstag der Anmeldung: **18.01.2006**
(21) Anmeldenummer: 04016289.3
(22) Anmeldetag: 10.07.2004
(51) Int. Cl.: A23L 1/00, A23L 1/0522, A23L 1/305, A23J 3/00

(54) **Nahrungsergänzungsmittel**

(71) Anmelder: Cognis IP Management GmbH, 40589 Düsseldorf (DE)
(72) Erfinder: Asensio, Juan-Antonio, Dr., 08820 El Prat de Llobregat (Barcelona) (ES); Viladot Petit, Josep-Lluis, Dr., 08018 Barcelona (ES); Rull Prous, Santiago, 08034 Barcelona (ES)

(57) **Zusammenfassung**

Vorgeschlagen werden Nahrungsergänzungsmittel, enthaltend
(a) Aminosäuren und/oder Proteine und
(b) mikroverkapselte Wirkstoffe, deren Matrix wenigstens anteilig aus chemisch modifizierter Stärke besteht.

## Beschreibung

### Gebiet der Erfindung

Die Erfindung befindet sich auf dem Gebiet der Nahrungsergänzungsmittel und betrifft Zubereitungen auf Basis von Aminosäuren oder Peptiden, die zur Verbesserung von Geruch und Geschmack in besonderer Weise verkapselte Wirkstoffe enthalten.

### Stand der Technik

Aminosäuren, insbesondere die sogenannten essentiellen, also nicht vom Körper selbst synthetisierten, sondern über die Nahrung zugeführten Spezies, besitzen eine unübertroffene Bedeutung für den menschlichen Organismus. Im Vordergrund steht zweifellos der Umstand, dass Aminosäuren Proteine aufbauen, daneben stellen sie aber auch Energiequellen für die Muskeln und Wachstumsfaktoren dar, sie wirken als Neurotransmitter, stimulieren die Ausschüttung von Hormonen und sind an einer Vielzahl von Biosynthesen beteiligt.

Die gleichzeitige Verfügbarkeit aller essentiellen Aminosäuren ist für den ungestörten Gewebeaufbau unerlässlich, sie müssen jeden Tag in einem ganz bestimmten Verhältnis zugeführt werden. Fehlt nur eine essentielle Aminosäure erfolgt ein Stillstand. Herkömmliche Nahrungsproteine werden nur zu 40-70% aufgeschlossen und resorbiert. Bei Stress, Verletzungen und chronischen Krankheiten, also in Zeiten in denen der Körper zusätzliche Proteine braucht, kann die Aufnahme herkömmlicher Proteine aus der Nahrung sogar erheblich reduziert sein. Niedermolekulares Protein besteht nun aus kurzkettigen Proteinen die nahezu zu 100%, Resorbiert werden, da für dessen Resorption nur ein stark reduzierter enzymattischer Aufwand durch den menschlichen Verdauungstrakt notwenig ist. Die Verwertung ist also 1,5 - 2 mal besser als der herkömmlicher Nahrungsproteine.

Es liegt somit auf der Hand, dass die krankheits- oder nahrungsbedingte Abwesenheit von Aminosäuren oder entsprechender niedermolekularer Proteine schwere Auswirkungen auf den menschlichen Organismus hat, die je nach Fehlen einer bestimmten Säure sehr unterschiedlich sein kann : Verminderung der Insulinfreisetzung (Leucin), Verminderung des Aufbaus von Vitamin B3 (Tryptophan), Schilddrüsenfehlfunktion (Phenylalanin, Tyrosin), Apetittlosigkeit, Gewichtsverlust, Fettleber, Zurückbleiben der Knochenentwicklung (Threonin), Wachstumsstörungen, Immunschwäche (Lysin) sowie Angstzustände und Depressionen (Methionin), um nur einige wenige Beispiele zu nennen.

Zum Ausgleich dieser Mangelerscheinungen finden sich im Markt Präparate, bei denen es sich überwiegend um Nahrungsmittelergänzungsstoffe (z.B. Sportlemahrung), aber auch um pharmazeutische Zubereitungen handeln kann, welche ausgewählte Aminosäuregemische oder gleich entsprechende Proteine, vorzugsweise niederen Molekulargewichtes enthalten. Obschon diese Mittel durchaus geeignet sind, den Mangelerscheinungen vorzubeugen oder abzuhelfen, haben sie den Nachteil ohne Ausnahme über einen unangenehmen metallischen Geschmack und nicht selten auch einen wenig attraktiven Geruch zu verfügen, was der Einnahme, insbesondere dann, wenn diese freiwilliger Natur ist und nicht durch eine Krankheit erzwungen wird, abträglich ist. Es hat nicht an Bemühungen gemangelt, dem Abzuhelfen. So wurden entsprechenden Präparaten schlicht geeignete Wirkstoffe, vorzugsweise Geschmacks- und Geruchsstoffe zugemengt. Dabei zeigte sich jedoch, dass die Aminosäuren bzw. Proteine sehr leicht mit den Stoffen in Wechselwirkung traten, was im einfachsten Fall dazu führte, dass der Zusatzstoff nach kurzer Zeit schlicht seinen Geschmack verlor, bis hin zu Veränderungen der Produktzusammensetzung, die nicht mehr tolerabel waren. Im nächsten Anlauf wurde dann seitens der Anmelderin versucht, die Geschmacksstoffe in verkapselter Form einzusetzen, so dass die Freisetzung erst bei der Einnahme erfolgt. Diese grundsätzlich sinnvolle Idee scheiterte jedoch daran, dass sich die untersuchten Kapselmaterialien ebenfalls als nicht inert gegenüber den Aminosäurezubereitungen erwiesen und die Wirkstoffe u früh freisetzten.

Die Aufgabe der vorliegenden Erfindung hat somit darin bestanden, neue Nahrungsergänzungsstoffe auf Basis von Aminosäuren und verkapselten Wirkstoffen zur Verfügung zu stellen, bei denen sich das Kapselmaterial als inert gegenüber den Aminosäuren bzw. Proteinen erweist. Um die orale Aufnahme zu erleichtern sollten die Kapseln zudem einen möglichst geringen mittleren Durchmesser von 0,1 bis 500 micras (= 0,0001 bis 0,5 mm) und vorzugsweise 10 bis 100 micras (=0,01 bis 0,1 mm) aufweisen.

### Beschreibung der Erfindung

Vorgeschlagen werden Nahrungsergänzungsmittel, enthaltend
(a) Aminosäuren und/oder Proteine und
(b) mikroverkapselte Wirkstoffe, deren Matrix aus chemisch modifizierter Stärke besteht.
Überraschenderweise wurde gefunden, das aus der Vielzahl von Materialien, die für die Herstellung von Kapseln vorgeschlagen und bekannt sind und daher getestet wurden, sich ausschließlich chemisch modifizierte Stärken als geeignet erwiesen haben, nicht nur die Wirkstoffe zuverlässig einzuschließen, sondern gegenüber den Aminosäurezubereitungen auch eine hohe Stabilität besitzen.

### Aminosäuren und Proteine

Die Auswahl der für die Herstellung der Nahrungsergänzungsmittel in Betracht kommenden Aminosäuren ist an sich unkritisch und richtet sich ausschließlich nach dem gewünschten Verwendungszweck. Die Gruppe der nicht essentiellen, d.h. vom Organismus unter normalen Umständen selbst synthetisierten Aminosäuren umfasst Alanin, Asparaginsäure Asparagin, Glutaminsäure, Glutamin, Glycin, Hydroxyprolin, Ornithin, Prolin und Serin. Als essentielle - und bevorzugte - Aminosäuren kommen in Betracht : Valin, Leucin, Isoleucin, Tryptophan, Phenylalanin, Methionin, Tyrosin, Threonin, Cystein, Lysin, Arginin, Histidin und Cystin. Die Aminosäuren können in beliebigen Mischungen und Mischungsverhältnissen zugegen sein. Statt der Säuren können auch niedermolekulare Proteine mit vorzugsweise 2 bis 10 Monomereinheiten sowie Mischungen von Aminosäuren und Proteinen eingesetzt werden.

### Mikrokapseln

Unter den Begriffen "Mikrokapsel" oder "Nanokapsel" werden vom Fachmann sphärische Aggregate mit einem Durchmesser im Bereich von etwa 0,0001 bis etwa 5 und vorzugsweise 0,005 bis 0,5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Im Sinne der Erfindung ist es erforderlich, dass die Matrix, also der Stoff, welcher die Wirkstoffe ummantelt, wenigstens anteilig, d.h. vorzugsweise zu mehr als 50 und insbesondere zu mehr als 90 Gew.-% aus einer chemisch modifizierten Stärke besteht. Als besonders vorteilhaft hat es sich erwiesen, zunächst eine wässrige Lösung oder Suspension der chemisch modifizierten Stärken herzustellen, die Wirkstoffe sowie gegebenenfalls einen Emulgator zuzugeben und die Mischung dann einer starken Scherung zu unterwerfen. Auf diese Weise werden besonders kleine Tröpfchen und nachfolgen besonders kleine Kapseln erhalten. Die Kapseln werden anschließend in an sich bekannter Weise durch Sprühtrocknung Lyophilisierung oder Trocknung nach vorheriger Zerkleinerung erhalten und weisen in der Regel einen mittleren Durchmesser von 0,1 bis 500 micras (= 0,0001 bis 0,5 mm) und vorzugsweise 10 bis 100 micras (= 0,01 bis 0,1 mm) auf.

### Chemisch modifizierte Stärken

Stärken stellen Polysaccharide dar, die aus einer Vielzahl von Pflanzen, wie beispielsweise Weizen, Kartoffeln, Reise oder Mais gewonnen werden. Der Begriff "chemisch modifiziert" hat sich in der Fachwelt für solche Stärken etabliert, bei denen einzelne Hydroxylgruppen verestert oder verethert vorliegen. Ebenfalls unter die modifizierten Stärken fallen Produkte, die Vernetzung von wenigstens zwei Stärkemolekülen erhalten werden, also beispielsweise über einzelne Hydroxylgruppen durch Ester oder Etherbrücken verknüpft sind. Schon der Einbau weniger Ester- oder Ethergruppen bzw. -brücken in das Stärkemolekül führt zu einer deutlichen Veränderung der physikalischen Eigenschaften. Entsprechende Produkte befinden sich im Handel und werden beispielsweise von der Firma National Starch unter der Bezeichnung Hi-Cap® 100 angeboten; andere geeignete Produkte sind Capsul®, Capsul® TA, Encapsul® 855 oder Flomax® 8.

### Pflanzenextrakte

Üblicherweise sind die Pflanzenextrakte, die im Sinne der vorliegenden Erfindung als eine Gruppe von Wirkstoffen Verwendung finden können, ausgewählt aus der Gruppe, die gebildet wird von *Ginkgo biloba, Oleacea europensis, Glyzyrrhiza glabra, Vaccinium myrtillus, Trifolium pratense, Litchi sinensis, Vitis vinifera, Brassica oleracea, Punica granatum, Petroselinium crispum, Centella asiatica, Passiflora incarnata, Medicago sativa, Valeriana officinalis, Castanea sativa, Salix alba* sowie *Hapagophytum procumbens.* Im folgenden wird kurz auf die Zusammensetzung und die wesentlichen aktiven Wirkstoffe in den Extrakten eingegangen.

### • Ginkgo biloba

Die aktiven Wirkstoffe der Extrakte, die aus den Blättern des Ginkgobaumes (*Ginkgo biloba*) gewonnen werden, sind Flavonoidglycosides, welche unter anderem (Iso)Quercitinglycoside, Kaempferol, Kaempferol-3-rhamnoside, Isorhamnetin, Luteolinglycoside, Sitosterolglycoside und insbesondere hexacyclische Terpenlactone, die sogenannten Ginkgolide A, B, C, J, M und Bilobalide enthalten. 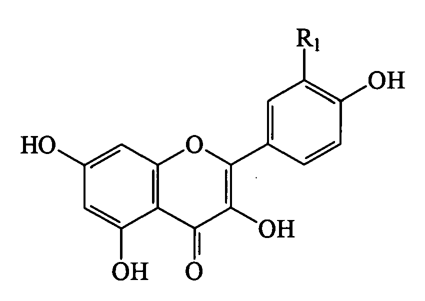 Isorhamnetin (R¹ = H), Kaempferol (R¹ = OH), Ginkgolid A (R¹ = OMe)

### • Oleacea europensis

Der Hauptbestandteil der Blätter des Olivenbaums (*Oleacea europensis*) ist das Antioxidants Oleuropein, das auch die wichtigste Quelle für Hydroxytyrosol darstellt.

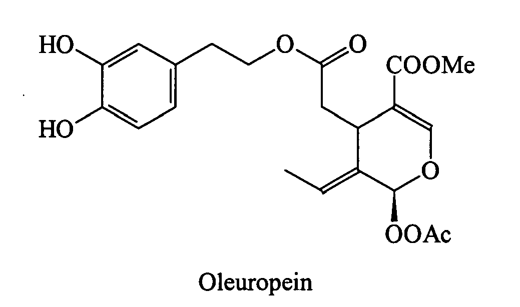

### • Glyzyrrhiza glabra

Hauptbestandteil des Extraktes der Süßwurzel *Glyzyrrhiza glabra* ist die Glyzyrrhetinsäure.

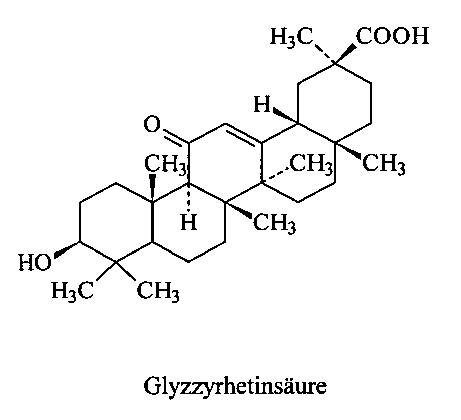

### • Vaccinium myrtillus

Extrakte der gemeinen Blaubeere (*Vaccinium myrtillus*) enthalten eine Mischung von wenigstens 15 verschiedenen Anthocyanosides, wie beispielsweise dem folgenden:

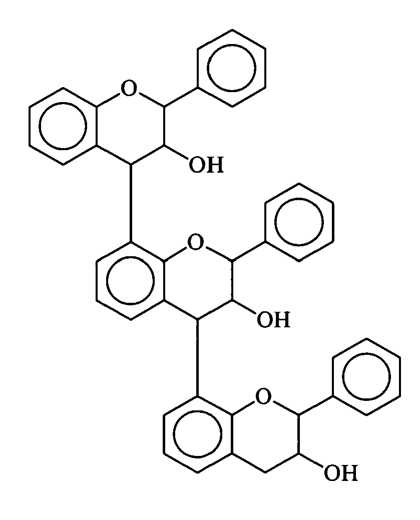

Üblicherweise, weisen die Extrakte 20 bis 25 Gew.-% Anthocyanoside, 5 bis 10 Gew.-% Tannine sowie geringe Mengen verschiedener Alkaloide, wie z.B. Myrtin und Epimyrtin, Phenolsäuren sowie Glycoside von Quercitrin, Isoquercitrin und Hyperosid auf.

### • Trifolium pratense

Die Hauptbestandteile der Extrakte des Rotklees (*Trifolium pratense*) sind Isoflavone, wie z.B. Daidzein, Genestein, Formononentin and Biochanin A sowie deren Glucosides wie z.B. Ononin oder Sissostrin:

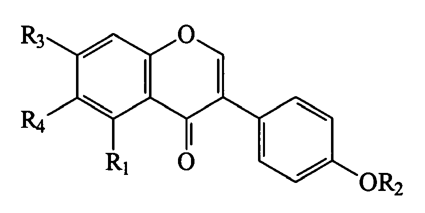

| Isoflavonglucoside | R₁ | R₂ | R₃ | R₄ |
|---|---|---|---|---|
| Daizidin | H | H | Glucose | H |
| Genistin | H | H | Glucose | OH |
| Ononin | H | CH₃ | Glucose | H |
| Sissostrin | H | CH₃ | Glucose | OH |

### • Litchi sinensis

Extrakte, die aus den Schalen der Litchifrucht (*Litchi sinensis*) gewonnen werden, weisen hohe Gehalte an Flavonerivaten auf, wie z.B. 2-Phenyl-4H-1-benzopyranen, Flavanen, Flavan-3-olen (Catechinen, Catechinoligomeren), Flavan-3,4-diolen (Leucoanthocyaniden), Flavonen, Flavonolen und Flavononen. Der Hauptbestandteil wird jedoch ausgemacht von kondensierten Tanninen, sogenannten Procyanodolen (OPC). Diese Stoffe enthalten 2 bis 8 Monomere des Catechins oder eines Catechintyps, wie z.B. Procyanidin, Proanthocynidin, Procyanidole, Oligoprocyanidin, Leucoanthocyanidin, Leucodelphinin, Leucocyanin and Anthocyanogen. OPC, vorzugsweise Proanthocyanidin A2 (OPC A2) verhalten sich wie Vitamin P, vor allem mit Hinblick auf die Inhibierung von Matrixmetallproteinasen.

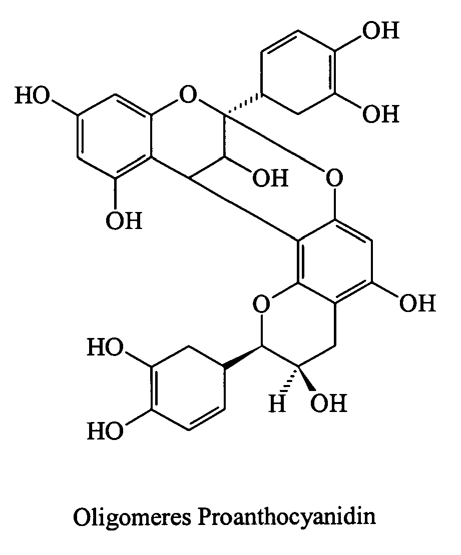

### • Vitis vinifera

Die Hauptbestandteile Extrakte aus Blättern, Wurzeln und insbesondere Schalen der Weintraube (*Vitis vinifera*) sind Polyphenole vom oben beschriebenen OPC-Typ.

### • Brassica oleracea

Die Hauptbestandteile der Extrakte des Blumenkohls (*Brassica oleracea*) sind Aminosäuren, insbesondere Methionin und Cystein sowie die Glucosinolate, wie z.B. Glucoraphanin.

### • Punica granatum

In den Extrakten des Granatapfels (*Punica granatum*) finden sich neben Zuckern und Zitronensäure insbesondere Delphinidin-1,2-glykoside sowie deren Aglykone.

### • Petroselinium crispum

Hauptbestandteil des fetten Öls der Petersilie (*Petroselinium crispum*) ist die Petroselinsäure. Die Extrakte hingegen zeigen hohe Gehalte an Apiol (1-Allyl-2,5-dimethoxy-3,4-(methylendioxy)benzol,), sowie Apiin, Myristicin, Pinen und Selinen.

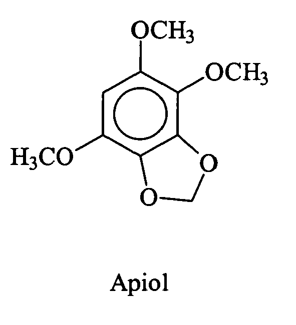

### • Centella asiatica

Hauptbestandteile der Extrakte der *Centella asiatica* sind hochkondensierte Naphthensäuren, speziell Asiaticasäure, Madecassicasäure sowie deren Glycoside.

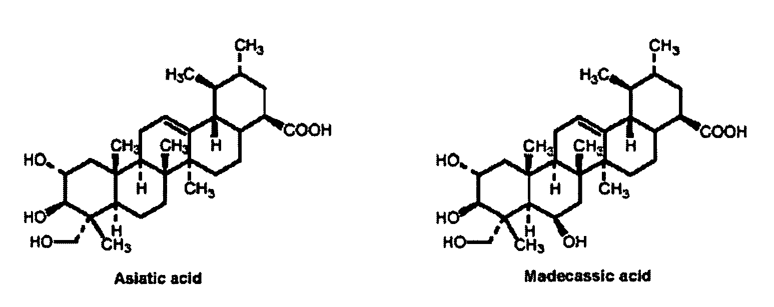

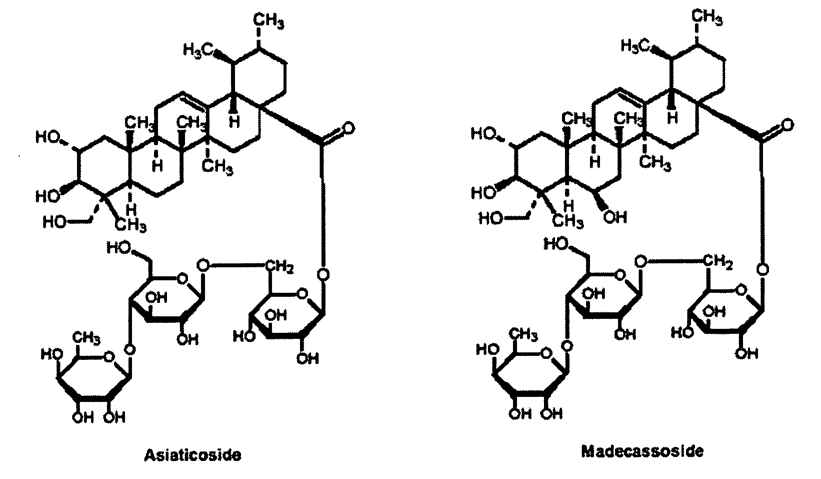

### • Passiflora incarnata

Extrakte der Passionsfrucht (*Passiflora incarnata*) sind reich an Flavonen vom Typ des Apigenins und Luteolins sowie deren C-Glycoside.

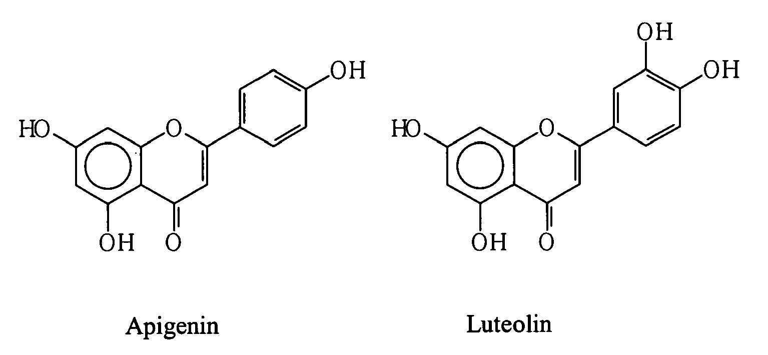

Des weiteren enthalten sie 2"-B-D-Glucosides, Schaftoside and Isoschaftoside, Isovitexin, Isoorientin, Vicenin-2, Incenin-2, Daponanin sowie Spurenelement, nämlich vor allem Kalzium, Phosphor und Eisen.

### • Medicago sativa

Extrakte der Alfalfa (*Medicago sativa*) sind reich an Isoflavonen, wie z.B. Daidzein, Genestein, Formononetin, Biochanin A und Tricin :

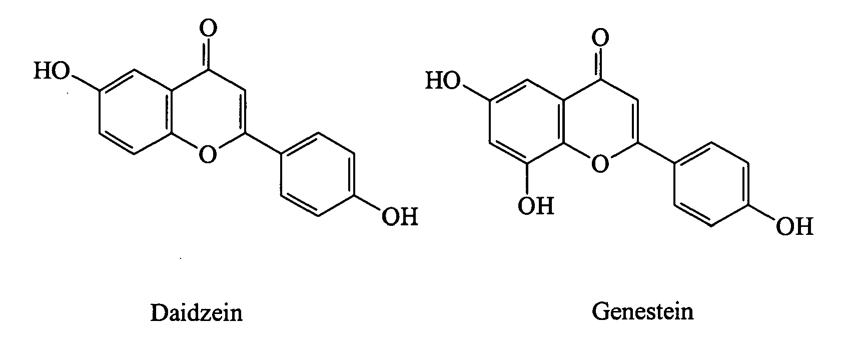

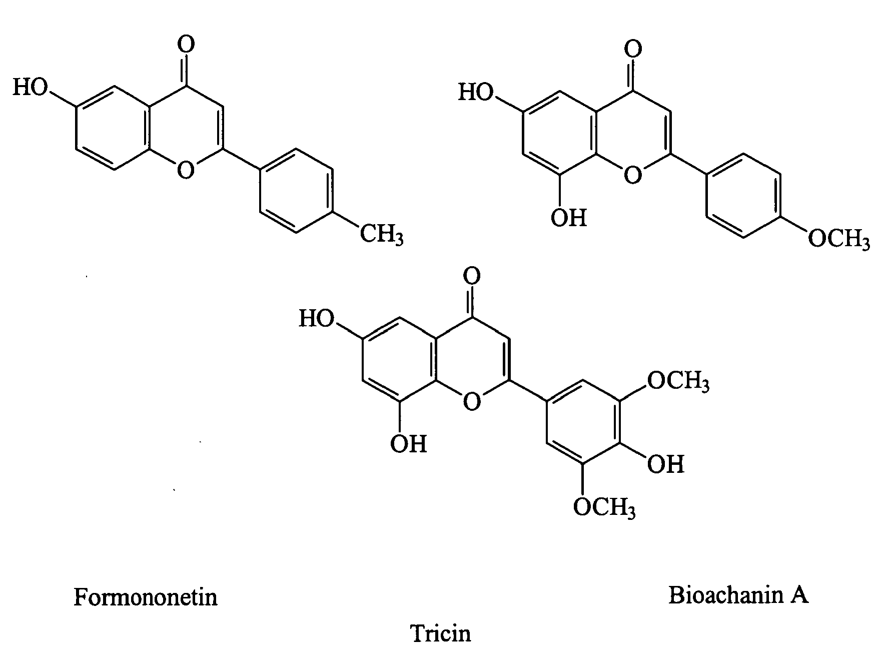

### • Valeriana officinalis

Die Hauptbestandteile von Extrakten der *Valeriana officinalis* sind Valeriansäure, Valerianon sowie Borneolester.

### • Castanea sativa

Rosskastanienextrakte (*Castanea sativa*) enthalten hauptsächlich Saponine sowie Escin, welches die Mischung zweier Glycoside darstellt, deren Aglycone sich von Proteoescigenin ableiten, während es sich bei den Zuckern entweder um Glucoronsäure oder zwei Molekülen D-Glucose handelt. Die beiden Glycoside unterscheiden sich in der Natur der Acylgruppen in der C22-Position.

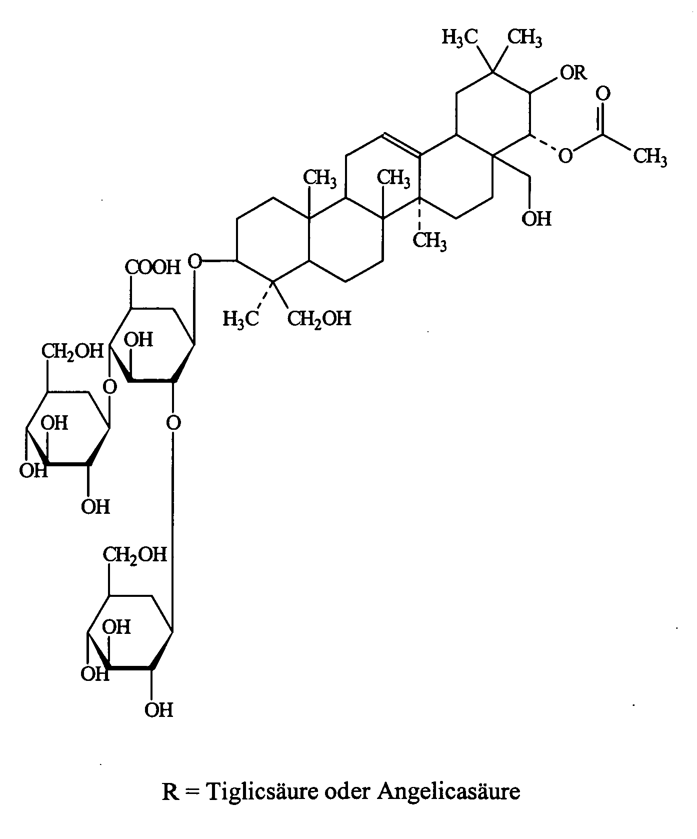

Während α-Escin ein amorphes Pulver darstellt, welches bei 225 bis 227 °C schmilzt und leicht wasserlöslich ist, liegt β-Escin (das auch als Flogencyl bezeichnet wird) in Form von Schuppen vor, die praktisch wasserunlöslich, aber leicht löslich in Alkohol sind.

### • Salix alba

Hauptbestandteile der Extrakte von *Salix alba* sind Phenolglykoside und insbesondere Salicylate wie z.B. Salicin, Salicortin und Tremulacin:

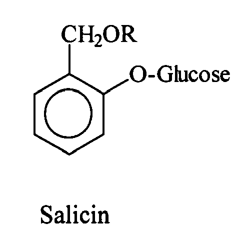

### • Harpagophytum procumbens

Die Hauptbestandteile der Extrakte der Teufelskralle *(Harpagophytum procumbens*) sind Iridoidglucoside, Harpagoside, Harpagide und Procumbide.

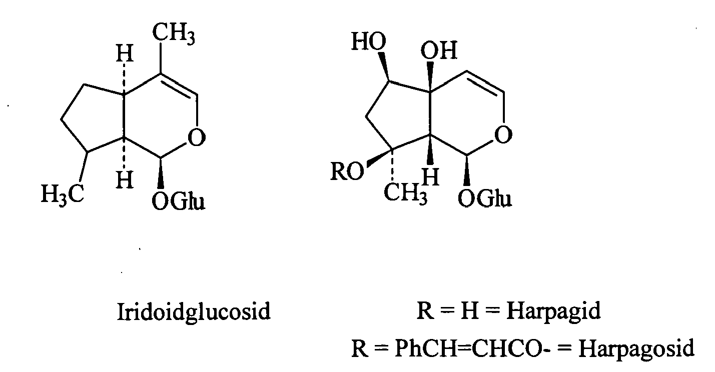

Des weiteren findet man Stachylose und glycosylierte Phytosterole (z.B. β-Sitosterol), Flavonoide (z.B. Kaempferol, Luteolin), Phenolsäuren und glycosidische Phenylpropansäureestem (z.B. Verbacoside, Isoacteoside).

### Geschmacksstoffe

Als Geschmacksstoffe Aromen kommen beispielsweise Pfefferminzöl, Krauseminzöl, Anisöl, Sternanisöl, Kümmelöl, Eukalyptusöl, Fenchelöl, Zitronenöl, Wintergrünöl, Nelkenöl, Menthol und dergleichen sowie Extrakte von Früchten sowie synthetische Fruchtaromen in Frage.

Üblicherweise setzt man die modifizierten Stärken und die Wirkstoffe - jeweils bezogen auf Aktivsubstanz - im Gewichtsverhältnis 0,1 : 99,9 bis 99,9 : 0,1, vorzugsweise 25 : 75 Bis 75 : 25 und insbesondere 30 : 70 bis 70 : 30 ein.

### Gewerbliche Anwendbarkeit

Weitere Gegenstände der vorliegenden Erfindung betreffen die Verwendung von Mischungen, enthaltend
(a) Aminosäuren und/oder Proteine und
(b) mikroverkapselte Wirkstoffe, deren Matrix wenigstens anteilig aus chemisch modifizierter Stärke besteht,
zum einen als Nahrungsergänzungsmittel und zum anderen zur Herstellung eines Medikamentes gegen Aminosäuremangelerscheinungen.

### Beispiele

### Beispiel 1

In eine Suspension von 90 kg einer modifizierten Stärke (Hi-Cap® 100, E-1450, National Starch) in 225 kg Wasser wurden 10 kg eines Erdbeerextraktes eingerührt. Zur Herstellung einer Emulsion mit möglichst kleinen Tröpfchengrößen wurde der Mischung unter starkem Rühren 0,5 kg Sorbitanester (Tween® 20) zugesetzt. Anschließend wurde der Mischung in an sich bekannter Weise durch Sprühtrocknung das Wasser entzogen. Die dabei resultierenden Kapseln wiesen einen mittleren Durchmesser von 25 micras = 0,25 mm auf.

### Beispiel 2

In eine Suspension von 90 kg einer modifizierten Stärke (Hi-Cap® 100, E-1450, National Starch) in 225 kg Wasser wurden 10 kg eines gefriergetrockneten Extraktes von *Ginkgo biloba* eingerührt. Zur Herstellung einer Emulsion mit möglichst kleinen Tröpfchengrößen wurde der Mischung unter starkem Rühren 0,5 kg Sorbitanester (Tween® 20) zugesetzt. Anschließend wurde der Mischung in an sich bekannter Weise durch Sprühtrocknung das Wasser entzogen. Die dabei resultierenden Kapseln wiesen einen mittleren Durchmesser von 20 micras = 0,2 mm auf.

### Beispiel 3

950 g einer pulverförmigen Aminosäurezubereitung mit gleichen Gewichtsanteilen Valin, Leucin, Isoleucin, Tryptophan, Phenylalanin, Methionin, Tyrosin, Threonin, Cystein, Lysin und Arginin wurden mit 50 g Mikrokapseln nach Beispiel 1 vermischt.

### Beispiel 4

950 g einer pulverförmigen Zubereitung von niedermolekularen Proteinen mit einer mittleren Zahl von Peptidbindungen von 8 und einer gleichmäßigen Gewichtsverteilung der monomeren Aminosäuren Valin, Leucin, Isoleucin, Tryptophan, Phenylalanin, Methionin, Tyrosin, Threonin, Cystein, Lysin und Arginin wurden mit 50 g Mikrokapseln nach Beispiel 2 vermischt.

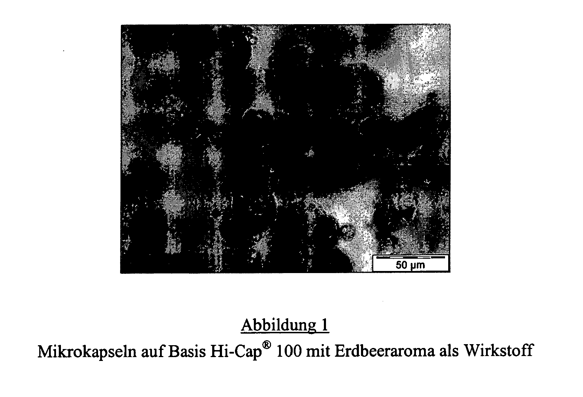

## Patentansprüche

1. Nahrungsergänzungsmittel, enthaltend
(a) Aminosäuren und/oder Proteine und
(b) mikroverkapselte Wirkstoffe, deren Matrix wenigstens anteilig aus chemisch modifizierter Stärke besteht.

2. Mittel nach Anspruch 1, **dadurch gekennzeichnet, dass** sie Mikrokapseln mit einem mittleren Durchmesser von 0,1 bis 500 micras (= 0,0001 bis 0,5 mm) aufweisen.

3. Mittel nach den Ansprüchen 1 und/oder 2, **dadurch gekennzeichnet, dass** sie als Wirkstoffe Pflanzenextrakte und/oder Geschmacksstoffe enthalten.

4. Mittel nach mindestens einem der Ansprüche 1 bis 3, **dadurch gekennzeichnet, dass** sie als Wirkstoffe Extrakte von Pflanzen enthalten, die ausgewählt sind aus der Gruppe, die gebildet wird von *Ginkgo biloba, Oleacea europensis, Glyzyrrhiza glabra, Vaccinium myrtillus, Trifolium pratense, Litchi sinensis, Vitis vinifera, Brassica oleracea, Punica granatum, Petroselinium crispum, Centella asiatica, Passiflora incarnata, Medicago sativa, Valeriana officinalis, Castanea sativa, Salix alba* sowie *Hapagophytum procumbens*.

5. Mittel nach mindestens einem der Ansprüche 1 bis 4, **dadurch gekennzeichnet, dass** sie als Wirkstoffe Geschmacksstoffe enthalten, die ausgewählt sind aus der Gruppe, die gebildet wird von Pfefferminzöl, Krauseminzöl, Anisöl, Sternanisöl, Kümmelöl, Eukalyptusöl, Fenchelöl, Zitronenöl, Wintergrünöl, Nelkenöl, Menthol sowie Extrakten von Früchten und synthetischen Fruchtaromen.

6. Mittel nach mindestens einem der Ansprüche 1 bis 5, **dadurch gekennzeichnet, dass** sie mikroverkapselte Wirkstoffe enthalten, bei denen die Matrix wenigstens anteilig aus Stärke besteht, die durch Veresterung bzw. Veretherung freier Hydroxylgruppen oder durch Vernetzung von wenigstens zwei Stärkemolekülen chemisch modifiziert worden ist.

7. Mittel nach mindestens einem der Ansprüche 1 bis 6, **dadurch gekennzeichnet, dass** sie Mikrokapseln enthalten, bei denen das Gewichtsverhältnis zwischen Wirkstoffen und der Matrix aus modifizierter Stärke 99,9 : 0,1 bis 0,1 : 99,9 beträgt.

8. Mittel nach mindestens einem der Ansprüche 1 bis 7, **dadurch gekennzeichnet, dass** sie Mikrokapseln enthalten, welche durch Sprühtrocknung, Lyophilisierung oder Zerkleinerung und nachfolgender Trocknung einer wässrigen Zubereitung aus Wirkstoff, modifizierter Stärke sowie gegebenenfalls Emulgatoren erhältlich sind.

9. Verwendung von Mischungen, enthaltend
(a) Aminosäuren und/oder Proteine und
(b) mikroverkapselte Wirkstoffe, deren Matrix wenigstens anteilig aus chemisch modifizierter Stärke besteht,
als Nahrungsergänzungsmittel.

10. Verwendung von Mischungen, enthaltend
(a) Aminosäuren und/oder Proteine und
(b) mikroverkapselte Wirkstoffe, deren Matrix wenigstens anteilig aus chemisch modifizierter Stärke besteht,
zur Herstellung eines Medikamentes gegen Aminosäuremangelerscheinungen.
